## Europäisches Patentamt
## European Patent Office
## Office européen des brevets

(19)

(11) Veröffentlichungsnummer : **0 066 067**
**B1**

(12) **EUROPÄISCHE PATENTSCHRIFT**

(45) Veröffentlichungstag der Patentschrift :
03.12.86

(21) Anmeldenummer : 82103094.7

(22) Anmeldetag : 10.04.82

(51) Int. Cl.⁴ : **H 04 N 9/82**

(54) **Videorecorder, bei dem mehrere Tonträger und ein Bildträger entlang einer Aufzeichnungsspur aufgezeichnet werden.**

(30) Priorität : 30.05.81 DE 3121600

(43) Veröffentlichungstag der Anmeldung :
08.12.82 Patentblatt 82/49

(45) Bekanntmachung des Hinweises auf die Patenterteilung : 03.12.86 Patentblatt 86/49

(84) Benannte Vertragsstaaten :
BE DE FR GB IT SE

(56) Entgegenhaltungen :
DE-A- 2 201 691
DE-A- 3 113 862
DE-B- 1 277 900
GB-A- 1 214 328
US-A- 3 806 638
US-A- 4 097 899

(73) Patentinhaber : TELEFUNKEN Fernseh und Rundfunk GmbH
Göttinger Chaussee 76
D-3000 Hannover 91 (DE)

(72) Erfinder : Kluth, Hans-Jürgen, Ing. grad.
Gartenstrasse 14
D-3008 Garbsen 8 (DE)

(74) Vertreter : Einsel, Robert, Dipl.-Ing.
TELEFUNKEN Fernseh und Rundfunk GmbH Göttinger Chaussee 76
D-3000 Hannover 91 (DE)

Jouve, 18, rue St-Denis, 75001 Paris, France

## Beschreibung

Bei Videorecordern ist es bekannt, das Videosignal durch Frequenzmodulation eines Bildträgers auf sogenannten Schrägspuren aufzuzeichnen, die unter einem vorbestimmten Winkel (bei VHS-Geräten ca. 6°) schräg zur Längsrichtung des Bandes verlaufen. Dabei ist vorzugsweise entlang einer derartigen Schrägspur jeweils z. B. ein Halbbild aufgezeichnet. Aufzeichnung und Abtastung erfolgen mit rotierenden Köpfen (bei VHS zwei Köpfe), die jeweils abwechselnd mit den Schrägspuren Kontakt haben. Auf diese Weise wird bei relativ langsamer Bandgeschwindigkeit die für Videoaufzeichnung erforderliche hohe Relativgeschwindigkeit zwischen Kopf und Band erreicht.

Bei derartigen Geräten wird das Tonsignal auf einer parallel zur Bandkante verlaufenden Längsspur mit einer Breite von etwa 1 mm mit einem feststehenden Kopf aufgezeichnet und abgetastet. Für die Aufzeichnung und Abtastung des Tonsignals ist also die kleinere Längsgeschwindigkeit des Bandes und nicht die wesentlich höhere Relativgeschwindigkeit zwischen Kopf und Band auf den Schrägspuren entscheidend. Die Längsgeschwindigkeit des Bandes ist nun in der Praxis zur Vergrößerung der Gesamtspieldauer eines Bandes auf Werte in der Größenordnung von 2 cm/s verringert worden. Diese geringe Relativgeschwindigkeit zwischen dem Band und dem Tonkopf hat einen nachteiligen Einfluß auf die Qualität des aufgezeichneten Tonsignals. Eine Hifi-Qualität läßt sich bei dieser geringen Relativgeschwindigkeit praktisch nicht mehr erreichen. Das aufgezeichnete Tonsignal hat nur noch eine Brandbreite von etwa 70 Hz bis max. 10 kHz. Wegen der geringen Breite der Längsspur ergibt sich auch ein relativ schlechter Störabstand. Dieser wird bei der Aufzeichnung von zwei Tonsignalen für Stereo-Wiedergabe oder Zweisprachen-Wiedergabe durch die dann notwendige Halbierung der Breite der Längsspur noch schlechter.

Es ist bekannt (DE-B-12 77 900), bei einer Schrägspuraufzeichnung einen oder mehrere mit Tonsignalen modulierte Tonträger zusammen mit dem Bildträger auf den Schrägspuren aufzuzeichnen. Dabei wird die Frequenz der Tonträger soweit herabgesetzt, daß sie unterhalb des vom modulierten Bildträger eingenommenen Frequenzspektrums liegt. Diese Lösung hat den Vorteil, daß wegen der hohen Relativgeschwindigkeit zwischen den Videoköpfen und dem Magnetband entlang den Schrägspuren auch für die Tonsignale eine hohe Aufzeichnungsbandbreite und somit eine hohe Tonqualität erreicht werden.

Bei einer derartigen Aufzeichnung entsteht jedoch bei der Tonwiedergabe eine Störung durch den Kopfwechsel bei Übergang von einer Schrägspur auf die nächste, weil die Abtastung vom Band kurzzeitig unterbrochen ist und Phasensprünge im Tonträger auftreten, die nach einer FM-Demodulation hörbare Störimpulse erzeugen.

Es wurde bereits vorgeschlagen (EP-A1 0 061 050), bei der Wiedergabe die Ausgangssignale der beiden rotierenden Köpfe im Tonsignalweg so unterschiedlich zu verstärken, daß die Tonträger auch bei Addition oder Subtraktion im Überlappungsbereich einander nicht auslöschen können und somit ein kontinuierlicher ununterbrochener Tonträger verfügbar ist.

Bei der beschriebenen Art der Tonaufzeichnung bewirkt die Aufbereitung der Tonsignale, insbesondere die Herabsetzung der Tonträgerfrequenzen bei der Aufnahme und die Hochsetzung bei der Wiedergabe, einen zusätzlichen Schaltungsaufwand sowie eine Qualitätsminderung, insbesondere eine Verringerung des Störabstandes.

Der Erfindung liegt die Aufgabe zugrunde, einen Videorecorder mit Aufzeichnung von zwei modulierten Tonträgern zusammen mit dem modulierten Bildträger auf einer Aufzeichnungsspur so auszubilden, daß bei geringem Schaltungsaufwand und geringer Qualitätsminderung bei der Wiedergabe die beiden Tonträger eines genormten Fernsehsignals mit ihrem genormten Frequenzabstand gewonnen werden können.

Diese Aufgabe wird durch die im Anspruch 1 beschriebene Erfindung gelöst. Vorteilhafte Weiterbildungen der Erfindung sind in den Unteransprüchen beschrieben.

Es ist zwar bekannt (DE-A-22 01 691), bei der Aufzeichnung des Farbträgers, des Tonträgers und des Bildträgers auf einer Spur eines Aufzeichnungsträgers den Farbträger und den Tonträger mit einem Pilotträger so zu mischen, daß ein in der Frequenz herabgesetzter Farbträger und unterhalb dessen Frequenzspektrum ein in der Frequenz herabgesetzter Tonträger entstehen. Diese Träger werden aufgezeichnet und der Tonträger bei Wiedergabe wieder in seine Original-Frequenzlage umgesetzt. Dort wird jedoch nicht die Aufzeichnung von zwei frequenzmodulierten Tonträgern behandelt. Es werden daher auch nicht zwei Tonträger mit herabgesetzten Frequenzen und einem der Norm entsprechenden Frequenzabstand erzeugt, mit diesen Frequenzabstand aufgezeichnet und bei der Wiedergabe unter Beibehaltung des Frequenzabstandes wieder in der Frequenz hochgesetzt.

Die bei der Erfindung vorgenommene Verringerung des oberen Seitenbandes des Farbträgers durch Bandbeschneidung ergibt zwar theoretisch Fehler, doch hat sich gezeigt, daß diese Fehler im wiedergegebenem Bild praktisch nicht merkbar sind. Bei PAL-Empfängern kompensiert das Prinzip des Farbfernsehsystem solche Fehler. Auch bei NTSC und SECAM ist dieser Fehler nicht so groß, das er im Bild störend wirkt.

Durch die Anwendung der bekannten Aufzeichnung der Tonträger gemeinsam mit dem Bildträger entlang derselben Aufzeichnungsspur zusammen mit der erfindungsgemäßen Lösung ergeben sich im wesentlichen folgende Vorteile :

Qualität der Original-Ton-Sendung bleibt erhalten. Auf eine FM-Tonträgerdemodulation für die Aufnahme kann verzichtet werden. Auf ein Kompandersystem kann verzichtet werden. Auf ein automatische Aussteuerung kann verzichtet werden. Auf die Generierung eines neuen Pilotsignals kann verzichtet werden. Auf den gesonderten Tonkopf kann verzichtet werden.

Durch hochfrequenzmäßige Aufzeichnung des Tonsignals und die Einsparung jeglicher Demodulation und Neumodulation läßt sich eine UKW-Qualität für den Ton erreichen. Ein weiterer Vorteil besteht darin, daß die bisher benötigte Längsspur für die Aufzeichnung des Tonsignals entfallen kann. Es kann dann entweder ein zusätzlicher Bereich des Magnetbandes für die Aufzeichnung des Bildsignals verwendet werden, oder dieser Bereich kann zusätzlich genutzt werden. Dadurch kann entweder die Qualität der Bildaufzeichnung verbessert oder der Bandverbrauch verringert werden. Eine besonders gute Ausnutzung des Magnetbandes läßt sich erreichen, wenn gemäß der DE-A-30 11 635 zusätzlich die bisher verwendete Synchronspur parallel zur Bandkante zur Markierung der Schrägspuren eingespart und das zur Kopfregelung benötigte, die einzelnen Schrägspuren anzeigende Signal mit einem feststehenden Kopf aus den Schrägspuren unter Ausnutzung des sogenannten Azimutwinkels abgeleitet wird. Dadurch läßt sich ein Videorecorder nur mit rotierenden Köpfen für das Schreiben der Schrägspuren, also ohne zusätzliche Aufzeichnungsköpfe für Längsspuren wie z. B. für die Tonaufzeichnung oder die Synchronspur, verwirklichen. Die dadurch frei werdende Bandfläche ermöglicht bei gleicher Bildqualität und gleicher Bandlänge eine Erhöhung der Spielzeit um etwa 16 %. Das bedeutet bei einer für eine Spieldauer von 4 Stunden vorgesehenen Kassette eine zusätzliche Spielzeit von 40 Minuten.

Verschiedene Ausführungsbeispiele der Erfindung werden an Hand der Zeichnung erläutert. Darin zeigen

Figur 1 das bekannte Frequenzspektrum für die Aufzeichnung der einzelnen Signale auf den Schrägspuren,

Figur 2 die Lage der beiden Tonträger in einer Abänderung des Spektrums nach Fig. 1 gemäß der Erfindung,

Figur 3 die Auswirkung der Änderung gemäß Fig. 2 auf die Videospektren,

Figur 4 ein Blockschaltbild für die Aufnahme,

Figur 5 eine Abänderung der Fig. 4,

Figur 6 ein Blockschaltbild für die Wiedergabe,

Figur 7 eine Abwandlung der in Fig. 6 dargestellten Schaltung,

Figur 8 die von den Köpfen gelieferten Signalpakete,

Figur 9 eine Darstellung eines Beispiels für einen schmalbandigen FM-Verstärker in Fig. 5, 7,

Figur 10 eine Darstellung eines Beispiels für ein Notch-Filter gemäß Fig. 5, 7,

Figur 11 eine Kennlinie der in Fig. 10 dargestellten Notch-Filter-Kombination,

Figur 12 eine schematische Darstellung des Aufzeichnungsapparates und

Figuren 13-17 ein Ausführungsbeispiel einer Weiterbildung der Erfindung.

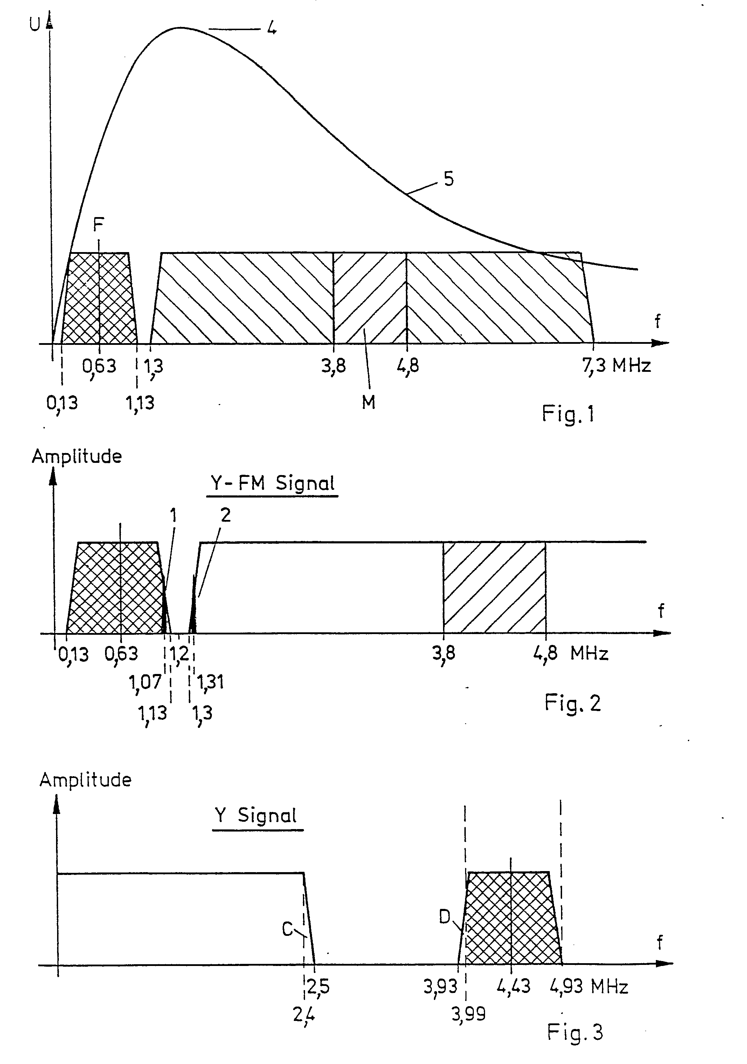

In Fig. 1 ist im unteren Frequenzbereich der in der Frequenz herabgesetzte quadraturmodulierte Farbträger F mit einer Frequenz von 0,63 MHz und einer Bandbreite von ca. ± 500 kHz aufgezeichnet. Das Videosignal V ist durch FM eines Bildträgers aufgezeichnet. Dessen statische Modulationskennlinie erstreckt sich zwischen den Frequenzen 3,8 und 4,8 MHz, wobei 3,8 MHz dem Ultra-Schwarzwert und 4,8 MHz dem Weißwert des Videosignals entspricht. Durch die Modulation ergibt sich ein Frequenzspektrum von 1,3 bis 7,3 MHz. Durch den Kopfspalt bedingt, wird das obere Seitenband (oberhalb 6 MHz) nicht vollständig abgetastet, so daß Störungen durch Signalspiegelungen vermindert werden. Tonsignale sind im bekannten Spektrum nicht enthalten. Sie werden bei bekannten Geräten gesondert aufbereitet und in einer entlang der Bandkante verlaufenden Spur aufgezeichnet.

In Fig. 2 sind die beiden Luminanz- und Chrominanzsignalspektren vergrößert dargestellt, wobei die durch die Erfindung eingeführte Position der Tonsignale angegeben ist. Innerhalb des Frequenzspektrums sind bei den Frequenzen 1,07 und 1,31 MHz zwei je mit einem NF-Tonsignal in FM modulierte Tonträger 1 und 2 aufgezeichnet. Wenn nämlich senderseitig ein Stereosignal eingeführt wird, das einen Abstand der FM-Tonträger von 250 kHz hat, so sollten zum Zwecke der für die Qualitätsverbesserung günstigen einfachen Umsetzung auch die Träger 1, 2 entsprechenden Abstand haben. Die beiden NF-Tonsignale können ein Monosignal, ein Stereosignal oder ein Tonsignal in verschiedenen Sprachen darstellen. Die Frequenzen der beiden Tonträger 1, 2 liegen etwa beim Maximum 4 der Kopf-Band-Frequenzgangkennlinie 5, die bei der Aufzeichnung des gesamten Signals auf den Schrägspuren wirksam ist. Dort ist die geringste Störung des Bildsignals durch das Tonsignal und umgekehrt gegeben, weil bezogen auf das demodulierte Videosignal die höherfrequenten Bildanteile in dem gewählten Bereich nur zu 10 % der Übertragungszeit vorkommen. Die für die Bildschärfe maßgebenden Frequenzen bleiben dagegen ungeschwächt erhalten. Zugleich haben die Videoköpfe aller Heimvideorecorder im Bereich um 2 MHz ihre größte Empfindlichkeit, so daß für die Wiedergabe die Stelle des optimalen Störabstandes gewählt ist. Damit ist die Austauschbarkeit von Videokassetten mit schwach aufgezeichneten Tonträgern innerhalb eines Kassettensystems problemlos.

Fig. 3 zeigt im normalen Frequenzspektrum des Fernsehsignals die durch die Erfindung eingeführten « Bandbreiteneinbußen » des Luminanzsignals und des Chrominanzsignals. Die Einbuße des Chrominanzsignals bei D ist 0,06 MHz. Die Einbuße des Luminanzsignals ist 0,10 MHz. Der Auflösungsverlust des Luminanzsignals ist vernachlässigbar und der Einseitenbandfehler des Chrominanzsignals nicht merkbar.

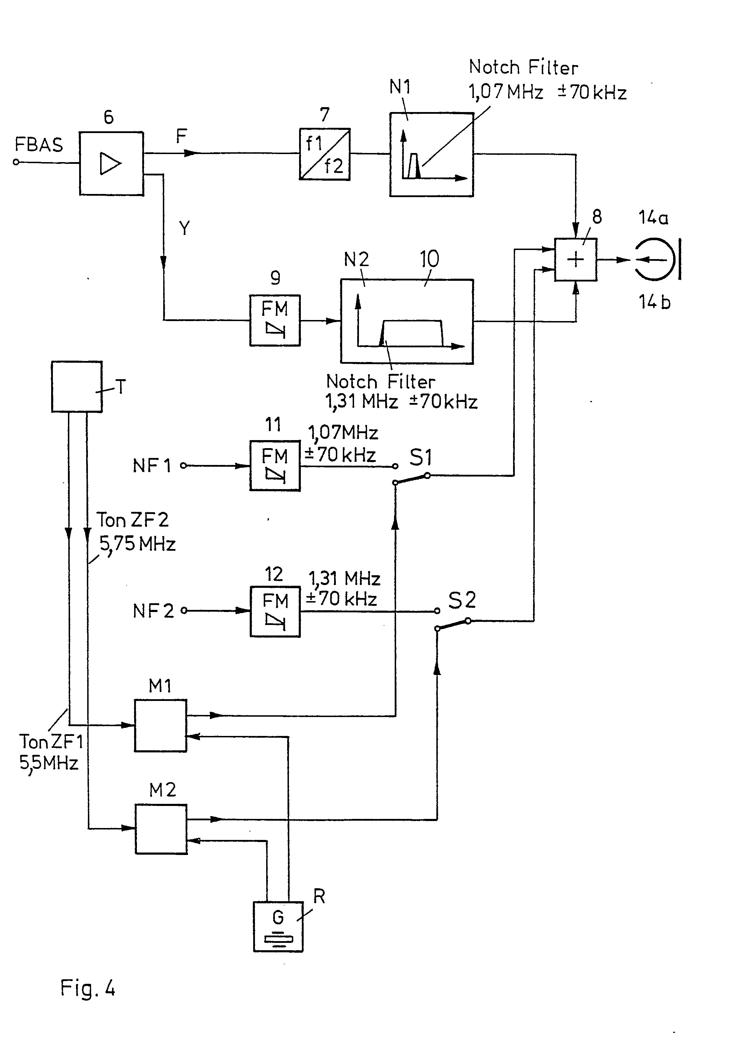

In Fig. 4 wird das FBAS-Signal in der Schaltung 6 durch frequenzselektive Mittel in den modulierten Farbträger F und das Leuchtdichtesignal Y (Luminanzsignal) getrennt. Der modulierte PAL-Farbträger F (Chrominanzsignal) wird in dem Frequenzumsetzer 7 von seiner Originalfrequenz 4,43 MHz auf die Frequenz 0,63 MHz umgesetzt und über ein Notch-Filter N1, das ist ein Filter mit extrem steiler Flanke zur Verschiebung der oberen Flanke des Chrominanzbandes, der Addierstufe 8 zugeführt. Das Leuchtdichtesignal Y wird in dem Frequenzmodulator 9 einem Bildträger aufmoduliert, wodurch ein Frequenzspektrum von 1,3 bis 7,3 MHz gemäß Fig. 1 entsteht. In diesem Frequenzspektrum wird in der Schaltung 10 durch ein nicht dargestelltes Notch-Filter die untere Flanke des Luminanzbandes nach oben verschoben. Das dadurch verbleibende Signal wird ebenfalls der Addierstufe 8 zugeführt. Zwei Tonsignale NF1 und NF2, z. B. von einem Mikrophoneingang, werden in zwei Frequenzmodulatoren 11, 12 zwei Trägern mit der Frequenz von 1,07 und 1,31 MHz aufmoduliert, die ebenfalls der Addierstufe 8 zugeführt werden. Bei einem zu übertragenden NF-Frequenzband von 15 kHz wird ein FM-Hub von ± 50 kHz gewählt, wodurch sich Modulationsbandbreiten von 1,07 bzw. 1,31 MHz ± 70 kHz ergeben. Zur Vermeidung von Störungen im Y-Signal durch die beiden Tonträger werden in der Schaltung 10 die Frequenzen der beiden Tonträger gemäß Fig. 2 durch das genannte Notch-Filter unterdrückt. Das Ausgangssignal der Addierstufe 8 enthält die in Fig. 2 dargestellten Signale und wird den Magnetköpfen 14a, 14b abwechselnd zur Aufzeichnung auf einem Magnetband zugeführt. Dieses in Fig. 1 oder 2 dargestellte Signalgemisch wird dann auf den Schrägspuren eines Magnetbandes aufgezeichnet. Zur Aufzeichnung von Tonsignalen, wie sie von Fernsehsendern ausgestrahlt und durch einen Tuner T empfangen werden, sind Mischer oder Modulatoren M1 und M2 vorgesehen, die die empfangenen und auf Zwischenfrequenz ZF1 (5,5 MHz) und ZF2 (5,742 MHz) umgesetzten modulierten Tonträger 1, 2 unter Beibehaltung der Hochfrequenz auf Frequenzen von 1,07 und 1,31 MHz umsetzen. Zu diesem Zweck ist eine quarzstabilisierte Referenzfrequenzquelle R mit einer Frequenz von 4,43 MHz vorgesehen, die bei PAL-Geräten der bereits vorhandenen Farbträgerreferenzoszillator sein kann. Als Mischer hat sich das IC MM 1496 (Fa. Motorola) bewährt. Die Ausgangsklemmen der Mischer M1 und M2 werden über Schalter S1 und S2 mit der Addierstufe verbunden, so daß das Gerät wahlweise auf NF-Tonsignal und HF-Tonsignal umschaltbar ist. Die Quelle R kann auch ein gesonderter Oszillator sein.

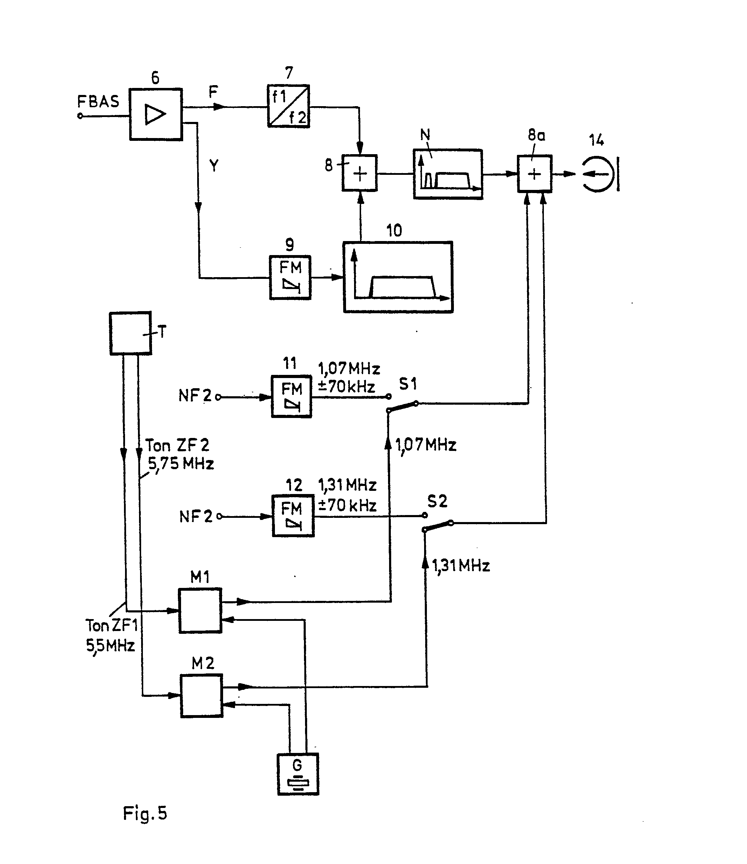

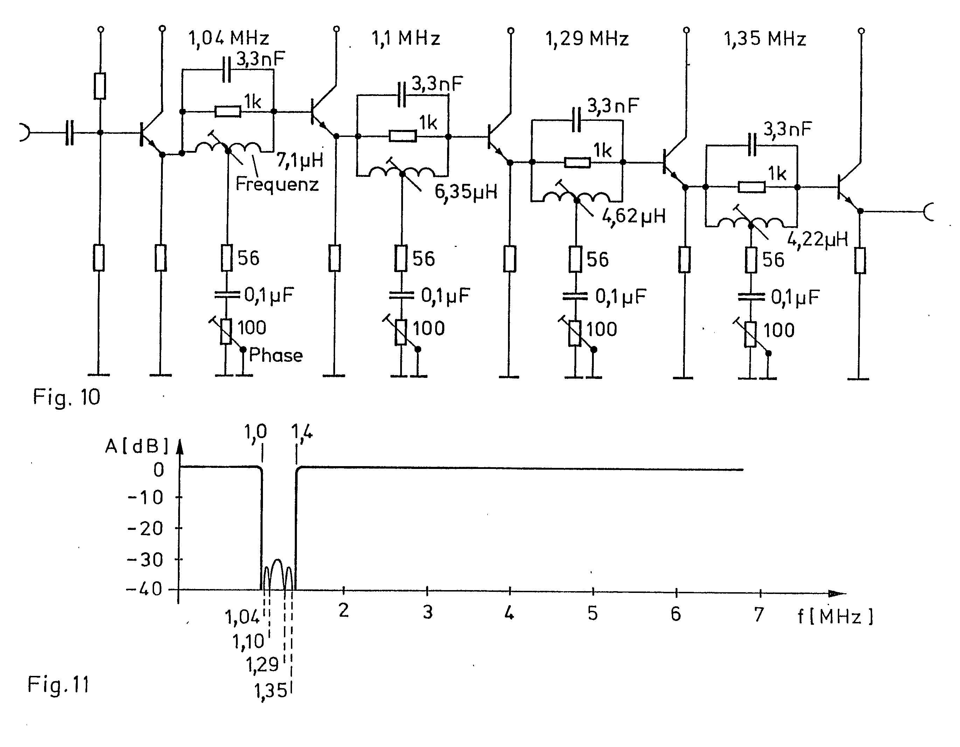

Fig. 5 zeigt eine Abwandlung der Fig. 4. Der Unterschied besteht in der Verwendung eines einzigen Notch-Filters N für Chrominanz- und Luminanzkanal, das in Fig. 10 im Detail dargestellt ist. Hierzu werden die Ausgangssignale des Frequenzumsetzers 7 und der Filterschaltung 10 einer Addierstufe 8 zugeführt, der im Gegensatz zu Fig. 4 nicht die Tonsignale zugeführt werden. Der Ausgang der Addierstufe 8 wird dem Notch-Filter N zugeführt und gelangt von dort zu einer weiteren Addierstufe 8a, der auch die Tonsignale von den Schaltern S1 und S2 zugeführt werden.

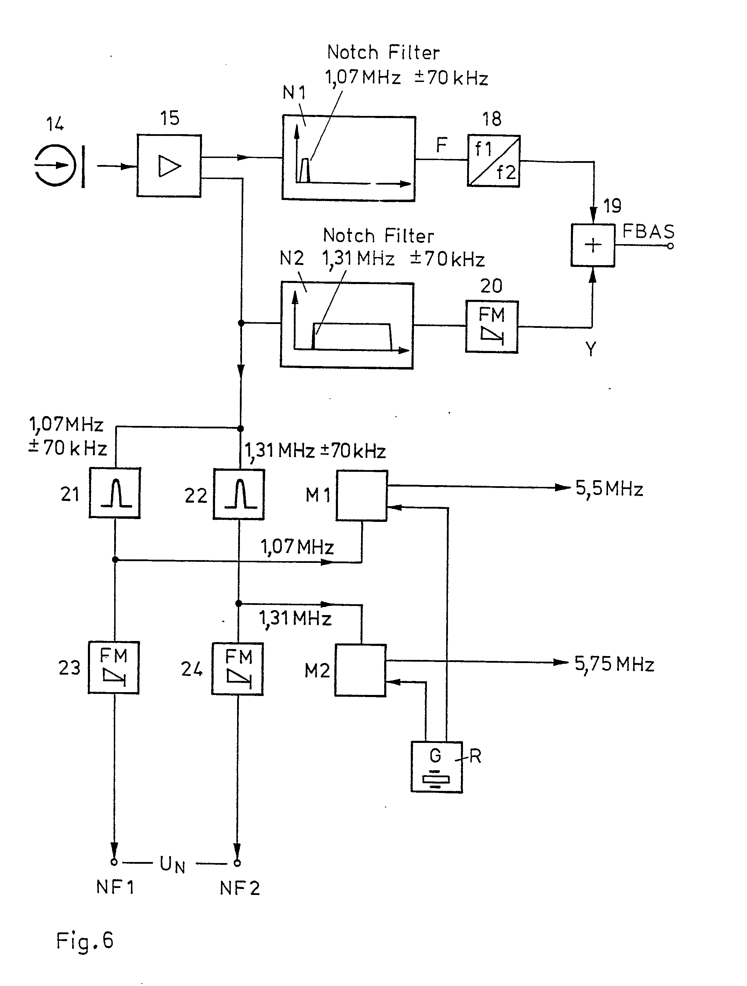

Fig. 6 zeigt eine Schaltung zur Wiedergabe des aufgezeichneten Spektrums gemäß Fig. 2. Das von den Köpfen 14a, 14b abwechselnd abgetastete Signal wird in einem Verstärker 15 verstärkt und mit getrennten Notch-Filtern N1 und N2 in den Chrominanzkanal und den Luminanzkanal aufgespalten. Demodulatoren 18 und 20 demodulieren diese Signale und leiten die demodulierten Signale zu einer Addierschaltung 19, in der das FBAS-Signal rückgewonnen wird. Die weitere Verarbeitung geschieht in üblicher, bekannter Weise. Vor den Eingängen der Notch-Filter N1, N2 wird das Tonsignal abgespaltet und über Filter 21, 22 zwei Mischern M1, M2 zugeführt, die mittels der Referenzfrequenz der Quelle R die Ton-ZF-Signale Ton ZF1, Ton ZF2 rückgewinnen. Diese ZF-Signale können direkt oder über erneute Umsetzung in die Empfangskanäle des VHF/UHF-Bandes dem Empfänger zugeführt werden. Die abgetasteten Tonsignale können aber auch direkt demoduliert werden, wenn das im Recorder benötigt wird.

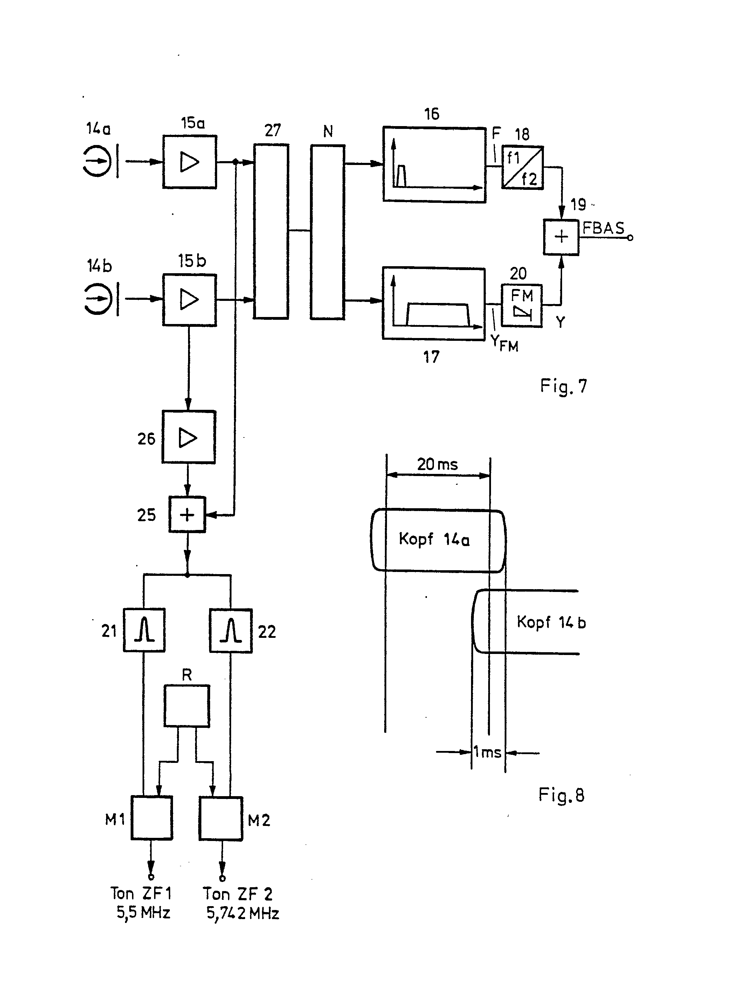

In Fig. 7 wird das von den Köpfen, 14a, 14b abwechselnd abgetastete Signalgemisch gemäß Fig. 1 in den Verstärkern 15a bzw. 15b verstärkt und über das Notch-Filter N vom Tonsignal befreit und über Filter 16, 17 in den modulierten Farbträger F und den modulierten Bildträger $Y_{FM}$ aufgespalten. Da der Wechsel zwischen den Köpfen 14a, 14b während der Dauer der Vertikalaustastlücke erfolgt, sind keine zusätzlichen Maßnahmen bezüglich der Videosignale erforderlich, außer einem harten elektronischen Umschalter 27 für die Kopfsignale der Verstärkerausgänge 15a und 15b für eine einwandfreie Farbrückumsetzung und FM-Demodulation. Der Farbträger F wird in dem Frequenzumsetzer 18 wieder auf die Frequenz von 4,43 MHz umgesetzt und der Addierstufe 19 zugeführt. In dem Frequenzdemodulator 20 wird das Leuchtdichtesignal Y gewonnen und der Addierstufe 19 zugeführt. Das von den Köpfen 14a und 14b gelieferte Gesamtsignalgemisch hat Überlappungszonen, in denen beide Köpfe 14a, 14b Kontakt mit dem Band haben und Ausgangssignale liefern. Diese Überlappungszonen bilden für die Tonträgersignale quasi eine weiche elektronische Überblendeinrichtung.

Fig. 8 zeigt das von den Köpfen 14a und 14b gelieferte Signalgemisch, wobei die Umschaltstellen für Y und Farbe markiert sind. Weil diese Überlappungszonen Phasenschwankungen unterliegen, können sich die Signalteile in diesen Zonen bei der Addition verstärken oder auslöschen, da beide Trägerpakete wegen der mitübertragenen Farbträgerinformation mit herabgesetztem Träger in AM sorgfältig auf gleiche Amplitude eingestellt sind. Diese Auslöschung liefert Tonstörungen.

Vor jeglicher Schaltung zum Linearisieren der Hüllkurve des von den Köpfen gelieferten Videosignalgemisches oder vor jeglicher Einrichtung zur harten elektronischen Überblendung wird das gesamte von den Köpfen 14a, 14b gelieferte Signalgemisch abgezweigt. Die beiden modulierten Tonträger werden mit schmalbandigen Filtern 21, 22 selektiv aus dem Signalgemisch gemäß Fig. 2 herausgetrennt und Mischern M1, M2 zugeführt. Die Mischer liefern die beiden Tonsignale Ton ZF1 und Ton ZF2. Das vom Kopf 14a bzw. vom Verstärker 15a gelieferte Gesamtsignal wird vor der Zuführung zu den Demodulatoren 23, 24 einer Addierstufe 25 zugeleitet. Das vom Kopf 14b bzw. vom Verstärker 15b gelieferte Gesamtsignal wird einem Verstärker 26 zugeführt, dessen Ausgangssignal ebenfalls der Addierstufe 25 zugeführt wird. Das Ausgangssignal der Addierstufe hat jetzt auf jeden Fall auch während der Umschaltphase der Köpfe ein Signal mit Tonsignalanteil, so daß die sonst unvermeidliche 50 Hz-Störung nicht auftreten kann.

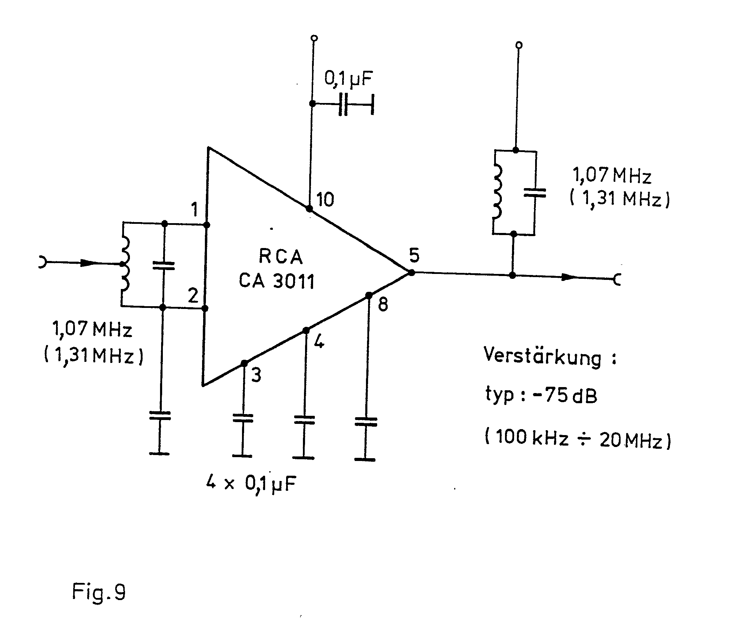

Fig. 9 zeigt ein Beispiel, das als Filter 21, 22 und zugleich als Verstärker für die FM-Ton-ZF-Signale geeignet ist. Ein solches Bauteil kann z. B. unter Verwendung des RCA-Breitbandverstärker IC's CA 3011 verwirklicht werden.

Für das Notch-Filter N wurde in der Praxis ein Ausführungsbeispiel erprobt, bei dem das Notch-Filter N aus vier im handelsüblichen Farbfernsehempfänger für die Unterdrückung des Farbträgers im Y-Kanal verwendeten Typen zusammengesetzt wurde, d. h. für die andere Frequenz- und Bandbreite abgewandelt wurde. Ein solches Filter ist in Fig. 10 dargestellt.

Fig. 11 zeigt eine Kennlinie des Filters gemäß Fig. 10, wobei die Filter so bemessen sind, daß ihre höchsten Sperrstellen an den Bandgrenzen liegen.

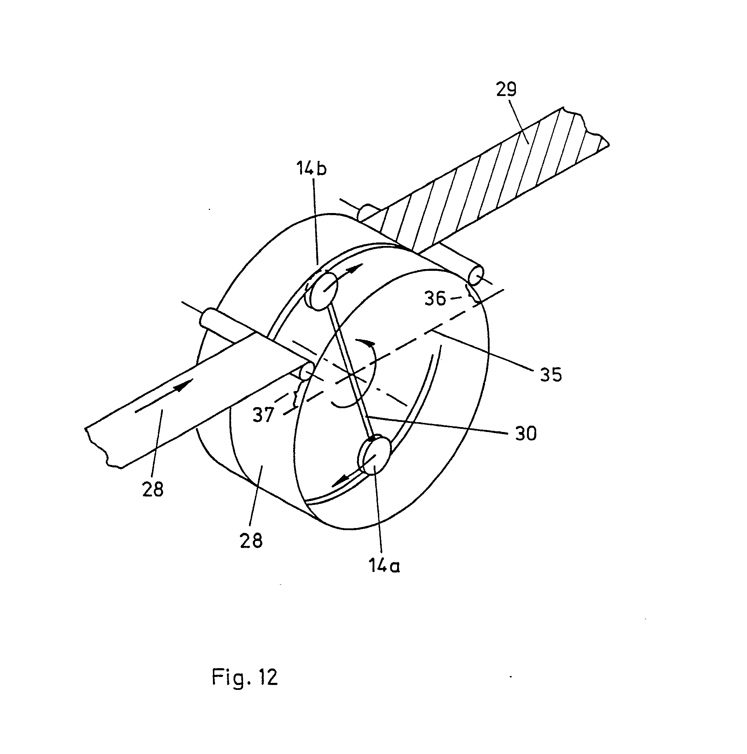

Fig. 12 zeigt eine schematische Konstruktion des Kopfrades mit einem Band 28, das eine Kopfradtrommel 30 mit zwei Köpfen 14a, 14b nach $\Omega$-Art umschließt, wobei auf dem Band 28 Schrägspuren 29 geschrieben werden. Die Linie 35 zeigt, daß die beiden Köpfe 14a, 14b in den Bereichen 36, 37 gleichzeitig abtasten können.

In der vorstehenden Beschreibung sind als Beispiel Frequenzen für Tonträger und Referenzträger angegeben. In der Praxis können je nach Anwendungsart sowohl die in der Norm festgelegten exakten Werte als auch vereinfachte Werte (z. B. 5,742 187 5 MHz oder nur 5,74 MHz für das Tonsignal NF2) verwendet werden. Bei einem erprobten Ausführungsbeispiel eines PAL-Gerätes (Fig. 8) wurde als Referenzträgerquelle R ein quarzstabilisierter PAL-Referenzoszillator mit einer Frequenz von 4,433 618 MHz ± 1 kHz verwendet, doch kann die Genauigkeit in den meisten Fällen geringer angesetzt werden als es für die Decodierung der PAL-Signale erforderlich ist. Die Genauigkeit muß so groß sein, daß die Demodulation im linearen Bereich der Demodulatorkennlinie erfolgt.

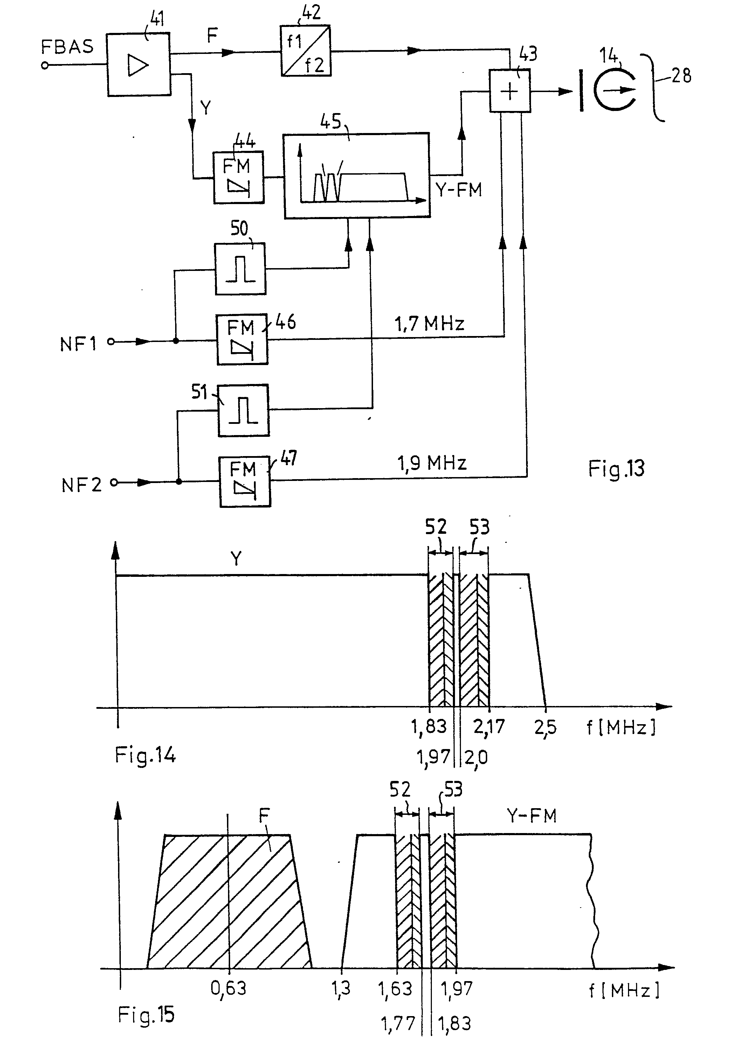

Bei einer anderen Ausführungsform der Erfindung wird die Sperrbandbreite bei der Unterdrückung der vom Tonträger eingenommenen Frequenz im Frequenzspektrum des Bildträgers in vorteilhafter Weise der jeweiligen Amplitude des NF-Tonsignals angepaßt. Die Frequenzunterdrückung wird also so gering gehalten, wie es in Anbetracht der jeweiligen Amplitude des Tonsignals nötig ist. Da das Tonsignal meistens nicht seine volle Amplitude hat, wird statistisch gesehen die Bildschärfe bei der Wiedergabe verbessert gegenüber derjenigen bei einem Filter mit konstanter Sperrbandbreite. Ein Ausführungsbeispiel dafür wird an Hand der Figuren 13-17 erläutert. Dabei zeigen

Figur 13  ein Blockschaltbild für die Aufnahme,

Figur 14  die Frequenzunterdrückung im Videosignal,

Figur 15  die Frequenzunterdrückung im Frequenzspektrum des modulierten Bildträgers,

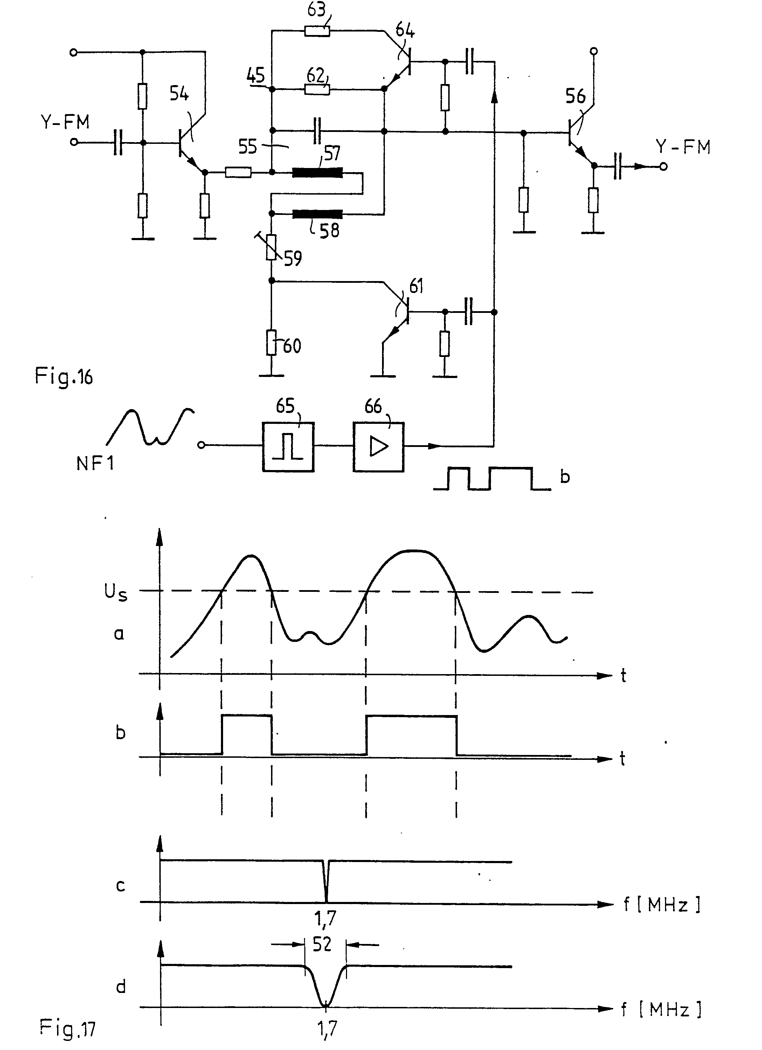

Figur 16  ein Ausführungsbeispiel für das steuerbare Filter und

Figur 17 Kurven zur Erläuterung der Wirkungsweise des Filters nach Figur 16.

In Figur 13 wird das FBAS-Signal dem Verstärker 41 zugeführt. Dieser liefert den modulierten PAL-Farbträger F mit einer Frequenz von 4,43 MHz. Diese Frequenz wird in dem Frequenz-umsetzer 42 auf eine Frequenz von 0,63 MHz herabgesetzt. Der so in der Frequenz herabgesetzte Farbträger wird der Addierstufe 43 zugeführt. Der Verstärker 41 liefert außerdem das Leuchtdichtesignal Y, das in dem Frequenzmodulator 44 einem Bildträger aufmoduliert wird. Dieser gelangt zu dem Filter 45, das das Frequenzspektrum am Ausgang des Modulators 44 durchläßt, darin jedoch zwei Sperrstellen bei den Frequenzen 1,7 und 1,9 MHz aufweist. Der mit dem Y-Signal frequenzmodulierte Bildträger Y-FM wird ebenfalls der Addierstufe 43 zugeführt.

Ein erstes Tonsignal NF1 wird dem FM-Modulator 46 zugeführt, der einen ersten Tonträger mit der Frequenz von 1,7 MHz erzeugt. Ein zweites Tonsignal NF2 wird dem zweiten FM-Modulator 47 zugeführt, der einen zweiten Tonträger mit der Frequenz von 1,9 MHz erzeugt. Die beiden Tonträger werden ebenfalls der Addierstufe 43 zugeführt. Am Ausgang der Addierstufe 43 stehen somit ein FBAS-Signal mit einem in der Frequenz herabgesetzten Farbträger F, der erste Tonträger mit der Frequenz von 1,7 MHz und der zweite Tonträger mit der Frequenz von 1,9 MHz. Dieses Signal wird dem Videokopf 14 zugeführt und auf dem Magnetband 28 aufgezeichnet. In der Praxis sind im allgemeinen zwei Videoköpfe vorhanden, die nacheinander Halbbilder auf Schrägspuren 29 des Magnetbandes 28 aufzeichnen.

Das Signal NF1 wird außerdem der Kippstufe 50 mit Schwellwertcharakteristik zugeführt. Wenn der Augenblickswert des Signals NF1 einen bestimmten Wert überschreitet, entsteht am Ausgang der Stufe 50 eine Stellgröße, die im Filter 45 die Sperrbandbreite bei der Frequenz von 1,7 MHz vergrößert. Der Frequenzbereich, der im Filter 45 bei der Frequenz von 1,7 MHz unterdrückt wird, wird also der jeweiligen Amplitude des Signals NF1 angepaßt. Auf gleiche Weise wird das Tonsignal NF2 der Stufe 51 zugeführt. Deren Ausgangsspannung steuert die Bandbreite der Unterdrückung im Filter 45 bei der Frequenz 1,9 MHz.

Figur 14 zeigt die Sperrbandbreite 52 für den Tonträger bei 1,7 MHz und die Sperrbandbreite 53 für den Tonträger bei 1,9 MHz, und zwar bezogen auf das Basis-Frequenzband des Y-Signals. Schaltungstechnisch würde dann das steuerbare Filter im Weg des Y-Signals, also vor dem Modulator 44 liegen, so daß bei der Modulation im Modulator 44 die Frequenzkomponenten im Bereich der beiden Tonträger nicht entstehen. Die gezeigten Sperrbandbreiten 52, 53 sind also nicht konstant, sondern von der jeweiligen Amplitude der Tonsignale NF1 und NF2 abhängig.

Figur 15 zeigt den in der Frequenz herabgesetzten Farbträger F und das Frequenzspektrum des modulierten Bildträgers Y-FM am Ausgang des Filters 45. Die gezeigten Sperrbandbreiten 52, 53 mit den dargestellten Frequenzen gelten also für die maximale Amplitude der Tonsignale NF1, NF2 und werden bei sinkender Amplitude entsprechend verringert. Die statische Modulationskennlinie des Modulators 44, die das Frequenzspektrum gemäß Figur 15 bewirkt, liegt zwischen den Frequenzen 3,8 MHz für den Schwarzwert und 4,8 MHz für den Weißwert des Videosignals Y.

Figur 16 zeigt ein Schaltungsbeispiel für das steuerbare Filter 45 in Figur 13. Das Signal Y-FM wird über die Emitterfolger-Transistorstufe 54 dem auf die Frequenz von 1,7 MHz bzw. 1,9 MHz abgestemmten Schwingkreis 55 zugeführt, der über eine weitere Emitterfolger-Stufe 56 mit der zur Addierstufe 43 führenden Ausgangsklemme verbunden ist. Die Induktivität des Sperrkreises 55 besteht aus den beiden einander gleichen Wicklungen 57, 58, die als Bifilarwicklung ausgebildet sind. Der Verbindungspunkt der Wicklungen 57, 58, d. h. der Mittelabgriff der Induktivität des Sperrkreises, ist über den einstellbaren Widerstand 59 und den Widerstand 60 mit Erde verbunden. Dem Widerstand 60 ist der Transistor 61 parallel geschaltet. Parallel zum Schwingkreis 55 liegt außerdem der Widerstand 62 sowie ein weiterer Widerstand 63 über den Transistor 64.

Anhand der Figur 17 wird die Steuerung des Filters gemäß Figur 16 erläutert. Wenn das Tonsignal NF1 gemäß Figur 17a unterhalb des Schwellwertes $U_S$ liegt, sind die Transistoren 61, 64 gesperrt. Der Widerstand 63 ist dann für die Dämpfung des Schwingkreises 55 wirkungslos. Der Widerstand 60 ist nicht überbrückt, so daß der Verbindungspunkt der Wicklungen 57, 58 hochohmig geerdet ist. Das Filter hat jetzt seine minimale Sperrbandbreite bei 1,7 MHz gemäß Figur 17c.

Wenn das Tonsignal NF1 den Schwellwert $U_S$ überschreitet, wird die Kippstufe 65 ausgelöst und erzeugt einen Impuls gemäß Figur 17b, der über den Verstärker 66 auf die Basen der Transistoren 61, 64 gelangt. Der Transistor 61 überbrückt dann den Widerstand 60, so daß der Verbindungspunkt der Wicklungen 57, 58 über den Widerstand 59 nunmehr niederohmig geerdet ist. Der Transistor 64 wird ebenfalls leitend und schaltet den Widerstand 63 dem Sperrkreis parallel, so daß dessen Dämpfung erhöht wird. Durch diese stärkere Dämpfung des Sperrkreises 55 ergibt sich eine vergrößerte Sperrbandbreite gemäß Figur 17d, die der größeren Amplitude des Signals NF1 angepaßt ist.

Die Steuerung der Sperrbandbreite 53 erfolgt mit einem weiteren Filter gemäß Figur 17 auf die gleiche Weise, lediglich für die andere Frequenz von 1,9 MHz.

Im dargestellten Beispiel wird die Sperrbandbreite zwischen zwei Werten gemäß Figur 17c und 17d umgeschaltet. Ebenso ist auch eine kontinuierliche Steuerung der Sperrbandbreiten 52, 53 durch die Amplitude des Tonsignals NF1 bzw. NF2 möglich. Es ist auch möglich, das Tonsignal einem Gleichrichter oder einem Siebglied zuzuführen, daraus eine der mittleren Amplitude gewonnene Stellgröße zu gewinnen und mit dieser Stellgröße die Sperrbandbreite 52 bzw. 53 zu steuern.

**Patentansprüche**

1. Videorecorder, bei dem entlang einer Aufzeichnungsspur ein mit dem Bildsignal frequenzmodulierter Bildträger, ein in der Frequenz herabgesetzter, unterhalb des Bildfrequenzspektrums angeordneter modulierter Farbträger und mehrere mit Tonsignalen frequenzmodulierte und in der Frequenz herabgesetzte Tonträger aufgezeichnet werden, dadurch gekennzeichnet, daß bei einem genormten Fernsehsignal die Tonträger (Ton ZF1, Ton ZF2) durch Mischung (M1, M2) mit einer Referenzspannung aus einer Referenzfrequenzspannungsquelle (R) in zwei in der Frequenz herabgesetzte Tonträger (1, 2) mit dem genormten Frequenzabstand (0,24 MHz) umgesetzt werden oder daß bei zwei niederfrequenten Tonsignalen (NF1, NF2) mit FM-Modulatoren (11, 12 ; 46, 47) zwei Tonträger (1, 2) mit den Frequenzen der genannten herabgesetzten Tonträger (1, 2) erzeugt werden und daß die herabgesetzten Tonträger (1, 2) entweder in der Frequenzlücke zwischen dem oberen, durch Bandbeschneidung herabgesetzten Ende des Frequenzspektrums des Farbträgers und dem unteren Ende des Frequenzspektrums des Bildträgers oder in einer durch Frequenzunterdrückung erzeugten Lücke innerhalb des Frequenzspektrums des Bildträgers aufgezeichnet und bei der Wiedergabe durch Mischung mit einer Referenzfrequenz auf die Frequenzen des genormten Fernsehsignals umgesetzt werden.

2. Recorder nach Anspruch 1, dadurch gekennzeichnet, daß dem Kanal für den Farbträger (F) und dem Kanal für den Bildträger Filter (10, N) mit steilwandiger Charakteristik zugeordnet sind, die den Frequenzbereich zwischen den Bandgrenzen der beiden Spektren auf den für die Tonträger (1, 2) benötigten Bereich bringen.

3. Recorder nach Anspruch 1 für PAL-Farbfernsehsignale, dadurch gekennzeichnet, daß die Referenzspannungsquelle (R) ein auf die PAL-Farbträgerfrequenz abgestimmter Referenzoszillator ist.

4. Recorder nach Anspruch 1, dadurch gekennzeichnet, daß die Referenzspannungsquelle (R) quarzstabilisiert ist.

5. Recorder nach Anspruch 1 für SECAM-Farbfernsehsignale, dadurch gekennzeichnet, daß die Referenzspannungsquelle ein stabilisierter Schwingkreis ist.

6. Recorder nach Anspruch 5, dadurch gekennzeichnet, daß der Schwingkreis ein auf die PAL-Frequenz Standard G abgestimmter, quarzstabilisierter Kreis ist (4,436 18 MHz).

7. Recorder nach Anspruch 1 für NTSC-Farbfernsehsignale, dadurch gekennzeichnet, daß die Referenzspannungsquelle ein quarzstabilisierter Oszillator ist.

8. Recorder nach Anspruch 1, dadurch gekennzeichnet, daß die Tonträger (1, 2) bei der Wiedergabe dem Antennenmodulator am Ausgang des Videorecorders zugeführt werden.

9. Recorder nach einem der Ansprüche 1-8, dadurch gekennzeichnet, daß bei Verwendung eines Pilotträgers zur Definition der Art der Tonträgermodulation (Mono, Stereo, Zweisprachen) für die Aufzeichnung die Differenzfrequenzen und für die Wiedergabe die Summenfrequenzen von Referenzfrequenz und Original- bzw. abgetasteten Pilotträger gebildet werden.

10. Recorder nach einem der Ansprüche 1-9, dadurch gekennzeichnet, daß dem Farbträgerkanal und dem Bildträgerkanal ein gemeinsames Filter (N) zugeordnet ist, das die Serienschaltung mehrerer, vorzugsweise von vier Notch-Filtern enthält, wobei die Nullstellen zweier Filter an den Stellen der Bandgrenzen liegen (Fig. 5, 10, 11).

11. Recorder nach einem der Ansprüche 1-10, dadurch gekennzeichnet, daß dem Bildträgerkanal und dem Farbträgerkanal je ein Filter (N) zugeordnet ist (Fig. 4, 6, 8).

12. Recorder nach Anspruch 1, dadurch gekennzeichnet, daß bei der Aufnahme im Frequenzspektrum (Fig. 15) des modulierten Bildträgers (Y-FM) der vom Tonträger eingenommene Frequenzbereich mit einem Filter (45) unterdrückt und die Sperrbandbreite (52, 53) des Filters (45) in Abhängigkeit von der Amplitude des Tonsignals (NF) so gesteuert ist, daß sie mit steigender Tonsignalamplitude zunimmt (Fig. 13-17).

13. Recorder nach Anspruch 12, dadurch gekennzeichnet, daß die Sperrbandbreite (52, 53) des Filters (45) jeweils dann auf einen größeren Wert umgeschaltet ist, wenn der Augenblickswert des Tonsignals (NF) einen Schwellwert ($U_s$) übersteigt (Fig. 16, 17).

14. Recorder nach Anspruch 12, dadurch gekennzeichnet, daß das Filter (45) einen im Längsweg liegenden Sperrkreis (55) enthält, dem zur Erhöhung der Sperrbandbreite (52, 53) ein Dämpfungswiderstand (63) parallel schaltbar ist (Fig. 16).

15. Recorder nach Anspruch 14, dadurch gekennzeichnet, daß die Induktivität des Sperrkreises (55) einen Mittelabgriff aufweist, der über einen bei Erhöhung des Tonsignalamplitude verringerten Widerstand (59, 60) geerdet ist (Fig. 16).

16. Recorder nach Anspruch 15, dadurch gekennzeichnet, daß die Induktivität durch eine Bifilarwicklung (57, 58) gebildet ist (Fig. 16).

17. Recorder nach Anspruch 12, dadurch gekennzeichnet, daß das Filter (45) ein Notch-Filter ist (Fig. 13).

18. Recorder nach Anspruch 12, dadurch gekennzeichnet, daß das Filter (45) im Weg des Videosignals liegt (Fig. 14).

19. Recorder nach Anspruch 12, dadurch gekennzeichnet, daß das Filter (45) im Weg des modulierten Bildträgers (Y-FM) liegt (Fig. 15).

20. Recorder nach Anspruch 12, dadurch gekennzeichnet, daß bei der Wiedergabe im Weg des frequenzmodulierten Bildträgers bei der Frequenz des Tonträgers ein Filter geringer und konstanter Sperrbandbreite liegt.

**Claims**

1. Video recorder in which along a recording track there are recorded a picture carrier frequency modulated by the picture signal, a modulated colour carrier of reduced frequency disposed beneath the picture frequency spectrum and several sound carriers of reduced frequency, frequency modulated with sound signals, characterized in that if there is a normal television signal, the sound carriers (Sound ZF1, Sound ZF2) are transposed by mixing (M1, M2) with a reference voltage from a reference frequency voltage source (R) to two sound carriers (1, 2) of reduced frequency having the normal frequency separation (0.24 MHz), or if there are two low frequency sound signals (NF1, NF2), two sound carriers (1, 2) are derived with the aid of FM modulators (11, 12 ; 46, 47) having the frequency of the aforesaid reduced frequency sound carriers, and the reduced frequency sound carriers (1, 2) are recorded either in the frequency gap between the upper end of the frequency spectrum of the colour carrier shifted downwardly by band clipping and the lower end of the frequency spectrum of the picture carrier, or in a gap produced by frequency suppression within the frequency spectrum of the picture carrier and on the reproduction are transposed by mixing with a reference frequency to the frequency for the normal television signal.

2. Recorder according to Claim 1, characterized in that, in the channel for the colour carrier (F) and in the channel for the picture carrier, filters (10, N) having steep sided characteristics are arranged, which bring the frequency range between the band limits of the two spectra to the range needed for the sound carriers (1, 2).

3. Recorder according to Claim 1 for PAL-colour television signals, characterized in that the reference voltage source (R) is an oscillator tuned to the PAL-colour carrier frequency.

4. Recorder according to Claim 1, characterized in that the reference voltage source (R) is quartz stabilised.

5. Recorder according to Claim 1 for SECAM-colour television signals, characterized in that the reference voltage source is a stabilised resonant circuit.

6. Recorder according to Claim 5, characterized in that the resonant circuit is a quartz stabilised circuit tuned on the PAL-frequency Standard G (4.436 18 MHz).

7. Recorder according to Claim 1 for NTSC-colour television signals, characterized in that the reference voltage source is a quartz stabilised oscillator.

8. Recorder according to Claim 1, characterized in that the sound carriers (1, 2) upon reproduction are conducted to the antenna modulator at the output of the video recorder.

9. Recorder according to any of the Claims 1-8, characterized in that upon use of a pilot carrier for the identification of the kind of the sound carrier modulation (mono, stereo, two language) there is formed, for the recording, the difference frequency and for the replay the sum frequency of the reference fequency and the original or, as the case may be, the derived pilot carrier.

10. Recorder according to any of the Claims 1-9, characterized in that a common filter (N) is arranged in the colour carrier channel and the picture carrier channel which includes the series connection of several, preferably four notch filters, whereby the null positions of two filters lie at the positions of the band limits (Fig. 5, 10, 11).

11. Recorder according to any of the Claims 1-10, characterized in that a filter (N) is located in each of the picture carrier channel and the colour carrier channel (Fig. 4, 6, 8).

12. Recorder according to Claim 1, characterized in that in the case of admission into the frequency spectrum (Fig. 15) of the modulated picture carrier (Y-FM), the frequency range occupied by the sound carrier is suppressed by a filter (45) and the blocking band width (52, 53) of the filter (45) is so controlled in dependence on the amplitude of the sound signal (NF) that it grows with increasing sound signal amplitude (Fig. 13-17).

13. Recorder according to Claim 12, characterized in that the blocking band width (52, 53) of the filter (45) is in each case switched to a greater value when the instantaneous value of the sound signal (NF) exceeds a threshold value (Us) (Fig. 16, 17).

14. Recorder according to Claim 12, characterized in that the filter (45) includes a blocking circuit (55) in the through path, in which a damping resistance (63) can be connected in parallel for increasing the blocking band width (52, 53) (Fig. 16).

15. Recorder according to Claim 14, characterized in that the inductance of the blocking circuit (55) has a mid-tap which is earthed *via* a resistance (59, 60) which is reduced upon an increase of the sound signal amplitude (Fig. 16).

16. Recorder according to Claim 15, characterized in that the inductance is provided by a bifilar winding (57, 58) (Fig. 16).

17. Recorder according to Claim 12, characterized in that the filter (45) is a notch filter (Fig. 13).

18. Recorder according to Claim 12, characterized in that the filter (45) lies in the path of the video signal (Fig. 14).

19. Recorder according to Claim 12, characterized in that the filter (45) lies in the path of the modulated picture carrier (Y-FM) (Fig. 15).

20. Recorder according to Claim 12, characterized in that upon reproduction a filter having a small and fixed blocking band width at the frequency of the sound carrier is located in the path of the frequency modulated picture carrier.

**Revendications**

1. Magnétoscope, dans lequel sont enregistrées le long d'une piste d'enregistrement une porteuse-image modulée en fréquence avec le signal d'image, une porteuse-couleur modulée, réduite en fréquence et placée en dessous du spectre de fréquence d'image et plusieurs porteuses-son modulées en fréquence avec des signaux-son et réduites en fréquence, caractérisé en ce que, pour un signal de télévision normalisé, les porteuses-son (son ZF1, son ZF2) sont converties, par mélange (M1, M2) avec une tension de référence provenant d'une source de tension de fréquence de référence (R), en deux porteuses-son (1, 2) réduites en fréquence et ayant l'espacement de fréquence normalisé (0,24 MHz), ou en ce que, dans le cas de deux signaux-son de basse fréquence (NF1, NF2), deux porteuses-son (1, 2) ayant les fréquences des porteuses-son (1, 2) précitées et réduites en fréquence, sont produites à l'aide de modulateurs-FM (11, 12 ; 46, 47), et en ce que les porteuses-son (1, 2) réduites en fréquence sont enregistrées soit dans l'intervalle de fréquence existant entre l'extrémité supérieure, réduite par le découpage de bande, du spectre de fréquence de la porteuse-couleur et l'extrémité inférieure du spectre de fréquence de la porteuse-image, ou bien dans un intervalle, produit par suppression de fréquence à l'intérieur du spectre de fréquence de la porteuse-image, et, lors de la reproduction, sont converties, par mélange avec une fréquence de référence, aux fréquences du signal de télévision normalisé.

2. Magnétoscope selon la revendication 1, caractérisé en ce que le canal de la porteuse-couleur (F) et le canal de la porteuse-image sont associés à des filtres (10, N) ayant une caractéristique de pente raide et qui transfèrent la plage de fréquences comprises entre les limites de bandes des deux spectres jusque dans la plage nécessaire pour les porteuses-son (1, 2).

3. Magnétoscope selon la revendication 1 pour des signaux de télévision couleur PAL, caractérisé en ce que la source de tension de référence (R) est un oscillateur de référence accordé sur la fréquence de la porteuse-couleur PAL.

4. Magnétoscope selon la revendication 1, caractérisé en ce que la source de tension de référence (R) est stabilisée avec quartz.

5. Magnétoscope selon la revendication 1 pour des signaux de télévision couleur SECAM, caractérisé en ce que la source de tension de référence est un circuit oscillant stabilisé.

6. Magnétoscope selon la revendication 5, caractérisé en ce que le circuit oscillant est un circuit stabilisé par quartz et accordé sur la norme de fréquence G du système PAL (4, 436 18 MHz).

7. Magnétoscope selon la revendication 1 pour des signaux de télévision couleur NTSC, caractérisé en ce que la source de tension de référence est un oscillateur stabilisé par quartz.

8. Magnétoscope selon la revendication 1, caractérisé en ce que les porteuses-son (1, 2) sont appliquées, lors de la reproduction, au modulateur d'antenne prévu à la sortie du magnétoscope.

9. Magnétoscope selon une des revendications 1 à 8, caractérisé en ce que, lors de l'utilisation d'une porteuse pilote pour une définition du mode de modulation de porteuse-son (mono, stéréo, deux langages), on établit pour l'enregistrement les fréquences de soustraction, et pour la reproduction les fréquences de sommation, d'une fréquence de référence et d'une porteuse pilote originale ou analysée.

10. Magnétoscope selon une des revendications 1 à 9, caractérisé en ce que le canal de porteuse-couleur et le canal de porteuse-image sont associés à un filtre commun (N), qui est constitué par la combinaison en série de plusieurs, de préférence quatre, filtres à créneaux, auquel cas les positions de zéro de deux filtres sont placées dans les positions des limites de bandes (figures 5, 10, 11).

11. Magnétoscope selon une des revendications 1 à 10, caractérisé en ce qu'un filtre (N) est associé respectivement au canal de porteuse-image et au canal de porteuse-couleur (figures 4, 6, 8).

12. Magnétoscope selon la revendication 1, caractérisé en ce que, lors de la réception dans le spectre de fréquence (figure 15) de la porteuse-image modulée (Y-FM), la plage de fréquence occupée par la porteuse-son est supprimée au moyen d'un filtre (45) et la largeur de bande d'arrêt (52, 53) du filtre (45) est commandée en fonction de l'amplitude du signal-son (NF) de telle sorte qu'elle augmente à mesure que l'amplitude du signal-son croît (figures 13-17).

13. Magnétoscope selon la revendication 12, caractérisé en ce que la largeur de bande d'arrêt (52, 53) du filtre (45) est commutée respectivement sur une valeur supérieure lorsque la valeur instantanée du signal-son (NF) dépasse une valeur de seuil ($U_S$) (figures 16-13).

14. Magnétoscope selon la revendication 12, caractérisé en ce que le filtre (45) contient un circuit d'arrêt (55) placé dans un trajet longitudinal et auquel une résistance d'amortissement (63) peut être branchée en parallèle pour augmenter la largeur de la bande d'arrêt (52, 53) (figure 16).

15. Magnétoscope selon la revendication 14, caractérisé en ce que l'inductance du circuit d'arrêt (55) comporte une prise centrale qui est mise à la terre par l'intermédiaire d'une résistance (59, 60) qui est réduite lors d'une augmentation de l'amplitude du signal-son (figure 16).

16. Magnétoscope selon la revendication 15, caractérisé en ce que l'inductance est constituée par un enroulement bifilaire (57, 58) (figure 16).

17. Magnétoscope selon la revendication 12, caractérisé en ce que le filtre (45) est un filtre à créneaux (figure 13).

18. Magnétoscope selon la revendication 12, caractérisé en ce que le filtre (45) est placé dans le trajet du signal vidéo (figure 14).

19. Magnétoscope selon la revendication 12, caractérisé en ce que le filtre (45) est placé dans le trajet de la porteuse-image modulée (Y-FM) (figure 15).

20. Magnétoscope selon la revendication 12, caractérisé en ce que, lors de la reproduction, il est prévu dans le trajet de la porteuse-image modulée en fréquence, pour la fréquence de la porteuse-son, un filtre ayant une largeur de bande d'arrêt plus petite et constante.

0 066 067

Fig. 1

Fig. 2

Y-FM Signal

Fig. 3

Y Signal

**0 066 067**

Notch Filter
1,07 MHz ±70 kHz

Notch Filter
1,31 MHz ±70 kHz

Ton ZF2
5,75 MHz

Ton ZF1
5,5 MHz

Fig. 4

2

Fig. 5

Fig. 6

Fig. 7

Fig. 8

Ton ZF 1
5,5 MHz

Ton ZF 2
5,742 MHz

0,1 µF

1,07 MHz
( 1,31 MHz )

1

10

RCA
CA 3011

2

5

1,07 MHz
( 1,31 MHz )

3

4

8

4 × 0,1 µF

Verstärkung :

typ : −75 dB

( 100 kHz ÷ 20 MHz )

Fig.9

Fig. 10

Fig. 11

0 066 067

Fig. 12

Fig.13

Fig.14

Fig.15

Fig.16

Fig.17